# EUROPEAN PATENT APPLICATION

(11) **EP 4 786 552 A1**
(43) Date of publication of application: **05.08.2026**
(21) Application number: 24872163.1
(22) Date of filing: 24.09.2024
(51) Int. Cl.: C09D 133/14, C09D 5/16, C09D 193/04

(54) **ANTIFOULING COATING MATERIAL COMPOSITION**

(30) Priority: 27.09.2023 JP 2023165249
(71) Applicant: Nitto Kasei Co., Ltd., Osaka-shi Osaka 533-0031 (JP)
(72) Inventor: MORI, Kiyomi, Osaka-shi, Osaka 533-0031 (JP); KITAMURA, Hitoshi, Osaka-shi, Osaka 533-0031 (JP)
(74) Representative: Gulde & Partner
(86) International application number: PCT/JP2024/033895
(87) International publication number: WO 2025/070372

(57) **Abstract**

Provided is an antifouling coating composition capable of maintaining a stable coating film dissolution rate and stable antifouling performance over a long period in low-temperature seawater. According to the present invention, provided is an antifouling coating composition comprising a copolymer A, a component B, and an antifouling agent D, wherein: the copolymer A is a copolymer of a monomer (a) represented by a general formula (1) and an ethylenically unsaturated monomer (b) other than the monomer (a); the monomer (a) includes a compound wherein n in the general formula (1) is 2 or more; the monomer (b) includes a monomer (b1) consisting of one or more selected from the group consisting of isobornyl acrylate and isobornyl methacrylate; a ratio of the monomer (b1) to a total of the monomer (a) and the monomer (b) is 5 to 50% by mass; and the component B is at least one selected from the group consisting of rosin, rosin derivatives, and metal salts thereof.

## Description

### [Technical Field]

The present invention relates to an antifouling coating composition.

### [Background Art]

There is a problem that aquatic fouling organisms such as barnacles, serpula, blue mussels, bryozoans, ascidians, sea lettuce, green algae, and slime attach to ships (especially ship bottoms), fishing gears such as fishing nets and fishing net accessories, and underwater structures such as power plant aqueducts, thereby impairing the functions of the ships and the like and spoiling their appearance.

To prevent such problems, a technique is known in which an antifouling coating composition is applied to a ship or the like to form an antifouling coating film, and an antifouling agent is gradually released from the antifouling coating film to exhibit antifouling performance over a long period of time (PTLs 1 to 4).

However, the antifouling coating film made of an alkoxycarbonylmethyl (meth)acrylate group-containing polymer described in PTLs 1 to 4 has remarkably low coating film solubility, making it difficult to exhibit antifouling properties over a long period of time. To solve these problems, a technique has been proposed in which the coating film dissolves over a long period to exhibit antifouling performance (PTL 5). Furthermore, a technique in which improvements are made in terms of coating film physical properties such as cracks and peeling has also been proposed (PTL 6).

### [Citation List]

### [Patent Literature]

[PTL 1] Japanese Examined Patent Publication No. S63-61989
[PTL 2] JP-A-2003-119420
[PTL 3] JP-A-2003-119419
[PTL 4] JP-A-2002-3776
[PTL 5] WO2020/045211
[PTL 6] WO2022/102492

### [Summary of Invention]

### [Technical Problem]

Although the antifouling coating film composed of the antifouling coating composition described in PTLs 5 and 6 has improved coating film solubility and coating film physical properties, there is still room for improvement in coating film solubility in low-temperature sea areas such as 15°C or lower. Therefore, an antifouling coating composition capable of maintaining excellent antifouling performance for a long period of time even in low-temperature sea areas has been desired.

The present inventor attempted to use a rosin-based compound (rosin, rosin derivative, rosin metal salt, or metal salt of a rosin derivative, etc.) in combination as a means for improving the coating film solubility in a low-temperature sea area. However, the compatibility with the copolymer was insufficient, resulting in problems lacking in coating film physical properties and coating stability, and thus a practical antifouling coating composition for low-temperature sea areas could not be provided.

The present invention has been made in view of such circumstances, and provides an antifouling coating composition capable of maintaining a stable coating film dissolution rate and maintaining stable antifouling performance over a long period of time in low-temperature seawater.

### [Solution to Problem]

According to the present invention, provided is an antifouling coating composition comprising a copolymer A, a component B, and an antifouling agent D, wherein: the copolymer A is a copolymer of a monomer (a) represented by a general formula (1) and an ethylenically unsaturated monomer (b) other than the monomer (a); the monomer (a) includes a compound wherein n in the general formula (1) is 2 or more; the monomer (b) includes a monomer (b1) consisting of one or more selected from the group consisting of isobornyl acrylate and isobornyl methacrylate; a ratio of the monomer (b1) to a total of the monomer (a) and the monomer (b) is 5 to 50% by mass; and the component B is at least one selected from the group consisting of rosin, rosin derivatives, and metal salts thereof.

As a result of intensive studies to solve the above problems, the present inventor found that a composition comprising a copolymer A, a component B, and an antifouling agent D can solve the above problems, and has completed the present invention.

### [Description of Embodiments]

The present invention will be described in detail below. In this specification, (meth)acrylic acid ester means acrylic acid ester or methacrylic acid ester, and (meth)acrylic acid means acrylic acid or methacrylic acid.

### 1. Antifouling coating composition

The antifouling coating composition of the present invention contains a copolymer A, a component B, and an antifouling agent D.

### 1-1. Copolymer A

The copolymer A is a copolymer of a monomer (a) and an ethylenically unsaturated monomer (b) other than the monomer (a).

The content of the monomer (a) relative to the total of the monomer (a) and the monomer (b) is preferably 10 to 90% by mass, and more preferably 20 to 70% by mass. Specifically, it is, for example, 10, 15, 20, 25, 30, 35, 40, 45, 50, 55, 60, 65, 70, 75, 80, 85, 90% by mass, and may be within a range between any two of the values exemplified here. In this case, the coating film solubility becomes particularly good.

The content of the monomer (b1) is 5 to 50% by mass, preferably 10 to 45% by mass, and more preferably 20 to 40% by mass out of the total mass of the monomer (a) and the monomer (b). Specifically, it is, for example, 5, 10, 15, 20, 25, 30, 35, 40, 45, 50% by mass, and may be within a range between any two of the values exemplified here.

### 1-1-1. Monomer (a)

Monomer (a) is represented by the general formula (1).

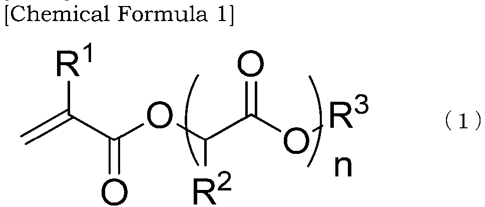

In the formula, R¹ represents hydrogen or a methyl group, R² represents hydrogen, a methyl group, or a phenyl group, R³ represents an alkyl group having 1 to 8 carbon atoms which may be substituted with an alkoxy group having 1 to 8 carbon atoms or a phenyl group, or represents a phenyl group, and n represents an integer of 1 to 10.

R² is preferably hydrogen or a methyl group.

The alkyl group having 1 to 8 carbon atoms of R³ may or may not be substituted with a substituent. The substituent may be an alkoxy group having 1 to 8 carbon atoms or a phenyl group. The carbon number of the alkoxy group or alkyl group of R³ is, for example, 1, 2, 3, 4, 5, 6, 7, 8, and may be within a range between any two of the values exemplified here. The alkyl group of R³ is, for example, a methyl group, an ethyl group, an n-propyl group, an isopropyl group, an n-butyl group, a t-butyl group, a 2-ethylhexyl group, a cyclohexyl group, a benzyl group, a phenyl group, a 2-methoxyethyl group, a 4-methoxybutyl group, a vinyl group, or an allyl group, and is preferably a methyl group, an ethyl group, an isopropyl group, or an n-butyl group.

n represents an integer of 1 to 10, and n is, for example, 1, 2, 3, 4, 5, 6, 7, 8, 9, 10, and may be within a range between any two of the values exemplified here.

The monomer (a) includes a compound in which n in the general formula (1) is 2 or more. When the monomer (a) contains a compound in which n is 2 or more, the coating film solubility increases. The monomer (a) may be composed solely of a compound in which n is 2 or more, or may be a mixture of a compound in which n is 1 and a compound in which n is 2 or more.

The monomer (a) is preferably composed of a monomer (a1) and a monomer (a2). The content of the monomer (a1) in the monomer (a) is 40 to 80% by mass, and preferably 50 to 70% by mass. The monomer (a1) has the property of increasing coating film strength and decreasing coating film solubility compared to the monomer (a2). For this reason, if the content of the monomer (a1) is too small, the coating film strength tends to be low, and the surface condition of the coating film tends to deteriorate after a long period of time. On the other hand, if the content of the monomer (a1) is too large, the coating film solubility may become low, resulting in a decrease in antifouling performance.

### <Monomer (a1)>

The monomer (a1) is a compound in which n in the general formula (1) is 1.

Examples of the monomer (a1) include methoxycarbonylmethyl (meth)acrylate, ethoxycarbonylmethyl (meth)acrylate, isopropoxycarbonylmethyl (meth)acrylate, n-propoxycarbonylmethyl (meth)acrylate, n-butoxycarbonylmethyl (meth)acrylate, t-butoxycarbonylmethyl (meth)acrylate, 2-ethylhexyloxycarbonylmethyl (meth)acrylate, cyclohexyloxycarbonylmethyl (meth)acrylate, benzyloxycarbonylmethyl (meth)acrylate, phenoxycarbonylmethyl (meth)acrylate, 2-methoxyethoxycarbonylmethyl (meth)acrylate, 4-methoxybutoxycarbonylmethyl (meth)acrylate, allyloxycarbonylmethyl (meth)acrylate, vinyloxycarbonylmethyl (meth)acrylate, 1-(methoxycarbonyl)ethyl (meth)acrylate, 1-(ethoxycarbonyl)ethyl (meth)acrylate, 1-(n-propoxycarbonyl)ethyl (meth)acrylate, 1-(isopropoxycarbonyl)ethyl (meth)acrylate, 1-(n-butoxycarbonyl)ethyl (meth)acrylate, 1-(t-butoxycarbonyl)ethyl (meth)acrylate, α-(methoxycarbonyl)benzyl (meth)acrylate, and α-(ethoxycarbonyl)benzyl (meth)acrylate. Preferred examples include methoxycarbonylmethyl (meth)acrylate, ethoxycarbonylmethyl (meth)acrylate, isopropoxycarbonylmethyl (meth)acrylate, n-propoxycarbonylmethyl (meth)acrylate, n-butoxycarbonylmethyl (meth)acrylate, 1-(methoxycarbonyl)ethyl (meth)acrylate, and 1-(ethoxycarbonyl)ethyl (meth)acrylate.

### <Monomer (a2)>

The monomer (a2) is a compound in which n in the general formula (1) is 2 or more. n in the general formula (1) is preferably 2 to 6 from the viewpoint of long-term antifouling properties.

The monomer (a2) preferably includes both a compound where n is 2 and a compound where n is 3 or more. Specifically, for example, the mass ratio in terms of solid content (n(2)/n(2 to 10)) is preferably 0.4 to 0.8, and more preferably 0.5 to 0.7. In this case, there is a tendency for stable coating film dissolution to be sustained. Specifically, this value is, for example, 0.40, 0.45, 0.50, 0.55, 0.60, 0.65, 0.70, 0.75, 0.80, and may be within a range between any two of the values exemplified here.

Examples of the monomer (a2) include:
methyl di(oxycarbonylmethyl) (meth)acrylate, ethyl di(oxycarbonylmethyl) (meth)acrylate, isopropyl di(oxycarbonylmethyl) (meth)acrylate, n-propyl di(oxycarbonylmethyl) (meth)acrylate, n-butyl di(oxycarbonylmethyl) (meth)acrylate, t-butyl di(oxycarbonylmethyl) (meth)acrylate, 2-ethylhexyl di(oxycarbonylmethyl) (meth)acrylate, cyclohexyl di(oxycarbonylmethyl) (meth)acrylate, benzyl di(oxycarbonylmethyl) (meth)acrylate, phenyl di(oxycarbonylmethyl) (meth)acrylate, 2-methoxyethyl di(oxycarbonylmethyl) (meth)acrylate, 4-methoxybutyl di(oxycarbonylmethyl) (meth)acrylate, allyl di(oxycarbonylmethyl) (meth)acrylate, vinyl di(oxycarbonylmethyl) (meth)acrylate, methyl di[1-(oxypolycarbonyl)ethyl] (meth)acrylate, ethyl di[1-(oxypolycarbonyl)ethyl] (meth)acrylate, n-propyl di[1-(oxypolycarbonyl)ethyl] (meth)acrylate, isopropyl di[1-(oxypolycarbonyl)ethyl] (meth)acrylate, n-butyl di[1-(oxypolycarbonyl)ethyl] (meth)acrylate, t-butyl di[1-(oxypolycarbonyl)ethyl] (meth)acrylate, methyl di[α-(oxycarbonyl)benzyl] (meth)acrylate, and ethyl di[α-(oxycarbonyl)benzyl] (meth)acrylate.

Preferred examples of the monomer (a2) include:
methyl di(oxycarbonylmethyl) (meth)acrylate, ethyl di(oxycarbonylmethyl) (meth)acrylate, isopropyl di(oxycarbonylmethyl) (meth)acrylate, n-propyl di(oxycarbonylmethyl) (meth)acrylate, n-butyl di(oxycarbonylmethyl) (meth)acrylate, methyl di[1-(oxypolycarbonylethyl)] (meth)acrylate, ethyl di[1-(oxypolycarbonylethyl)] (meth)acrylate, methyl poly(oxycarbonylmethyl) (meth)acrylate, ethyl poly(oxycarbonylmethyl) (meth)acrylate, isopropyl poly(oxycarbonylmethyl) (meth)acrylate, n-propyl poly(oxycarbonylmethyl) (meth)acrylate, n-butyl poly(oxycarbonylmethyl) (meth)acrylate, t-butyl poly(oxycarbonylmethyl) (meth)acrylate, 2-ethylhexyl poly(oxycarbonylmethyl) (meth)acrylate, cyclohexyl poly(oxycarbonylmethyl) (meth)acrylate, benzyl poly(oxycarbonylmethyl) (meth)acrylate, phenyl poly(oxycarbonylmethyl) (meth)acrylate, 2-methoxyethyl poly(oxycarbonylmethyl) (meth)acrylate, 4-methoxybutyl poly(oxycarbonylmethyl) (meth)acrylate, allyl poly(oxycarbonylmethyl) (meth)acrylate, vinyl poly(oxycarbonylmethyl) (meth)acrylate, methyl poly[1-(oxypolycarbonyl)ethyl] (meth)acrylate, ethyl poly[1-(oxypolycarbonyl)ethyl] (meth)acrylate, n-propyl poly[1-(oxypolycarbonyl)ethyl] (meth)acrylate, isopropyl poly[1-(oxypolycarbonyl)ethyl] (meth)acrylate, n-butyl poly[1-(oxypolycarbonyl)ethyl] (meth)acrylate, t-butyl poly[1-(oxypolycarbonyl)ethyl] (meth)acrylate, methyl poly[α-(oxycarbonyl)benzyl] (meth)acrylate, and ethyl poly[α-(oxycarbonyl)benzyl] (meth)acrylate.

More preferred examples of the monomer (a2) include:
methyl poly(oxycarbonylmethyl) (meth)acrylate, ethyl poly(oxycarbonylmethyl) (meth)acrylate, isopropyl poly(oxycarbonylmethyl) (meth)acrylate, n-propyl poly(oxycarbonylmethyl) (meth)acrylate, n-butyl poly(oxycarbonylmethyl) (meth)acrylate, methyl poly[1-(oxypolycarbonylethyl)] (meth)acrylate, ethyl poly[1-(oxypolycarbonylethyl)] (meth)acrylate, and the like.

### 1-1-2. Monomer (b)

The monomer (b) is an ethylenically unsaturated monomer other than the monomer (a). The monomer (b) can be classified into a monomer (b1) and a monomer (b2), and the monomer (b) used for the polymerization of the copolymer A includes at least the monomer (b1).

### <Monomer (b1)>

The monomer (b1) is one or more compounds selected from isobornyl acrylate and isobornyl methacrylate. By including the monomer (b1) in the monomers for polymerizing the copolymer A, the compatibility between the copolymer A and the component B can be enhanced. Furthermore, isobornyl acrylate and isobornyl methacrylate have a property of not easily reducing the hardness of a coating film formed using the antifouling coating composition of the present invention.

The ratio of the monomer (b1) to the total of the monomer (a) and the monomer (b) is 5 to 50% by mass, preferably 10 to 45% by mass, and more preferably 20 to 40% by mass. Specifically, the ratio is, for example, 5, 10, 15, 20, 25, 30, 35, 40, 45, or 50% by mass, and may be within a range between any two of the numerical values exemplified herein. If this ratio is too small, the effect of improving the compatibility between the copolymer A and the component B tends to be insufficient. If the ratio is too large, coating film dissolution or antifouling performance tends to be insufficient.

### <Monomer (b2)>

The monomer (b2) is the monomer (b) excluding the monomer (b1). Examples of the monomer (b2) include (meth)acrylic acid esters, vinyl compounds, aromatic compounds, and dialkyl ester compounds of dibasic acids.

Examples of the (meth)acrylic acid ester as the monomer (b2) include (meth)acrylic acid esters such as methyl acrylate, methyl methacrylate, ethyl acrylate, ethyl methacrylate, butyl acrylate, butyl methacrylate, isobutyl acrylate, isobutyl methacrylate, t-butyl acrylate, t-butyl methacrylate, 2-ethylhexyl acrylate, 2-ethylhexyl methacrylate, lauryl acrylate, lauryl methacrylate, benzyl acrylate, benzyl methacrylate, phenyl acrylate, phenyl methacrylate, cyclohexyl acrylate, cyclohexyl methacrylate, stearyl acrylate, stearyl methacrylate, 2-methoxyethyl acrylate, 2-methoxyethyl methacrylate, 2-ethoxyethyl acrylate, 2-ethoxyethyl methacrylate, 3-methoxybutyl acrylate, 3-methoxybutyl methacrylate, 2-(2-ethoxyethoxy)ethyl acrylate, 2-(2-ethoxyethoxy)ethyl methacrylate, 2-phenoxyethyl acrylate, 2-phenoxyethyl methacrylate, tetrahydrofurfuryl acrylate, tetrahydrofurfuryl methacrylate, 2-hydroxyethyl acrylate, 2-hydroxyethyl methacrylate, 2-hydroxypropyl acrylate, 2-hydroxypropyl methacrylate, and cyclic trimethylolpropane formal acrylate; and (meth)acrylic acid silyl esters such as triisopropylsilyl acrylate and triisopropylsilyl methacrylate.

Examples of the vinyl compound as the monomer (b2) include vinyl compounds having a functional group such as vinyl chloride, vinylidene chloride, vinyl benzoate, vinyl butyrate, butyl vinyl ether, and lauryl vinyl ether.

Examples of the aromatic compound as the monomer (b2) include styrene, vinyltoluene, and α-methylstyrene.

Examples of the dialkyl ester compound of a dibasic acid as the monomer (b2) include dibutyl maleate.

### 1-1-3. Physical Properties and Production Method of Copolymer A

The weight average molecular weight (Mw) of the copolymer A is preferably 5,000 to 300,000. This is because if the molecular weight is less than 5,000, the coating film of the antifouling paint becomes fragile and prone to peeling or cracking, and if it exceeds 300,000, the viscosity of the polymer solution increases, making handling difficult. Specifically, this Mw is, for example, 5,000, 10,000, 20,000, 30,000, 40,000, 50,000, 60,000, 70,000, 80,000, 90,000, 100,000, 200,000, or 300,000, and may be within a range between any two of the numerical values exemplified herein.

Examples of the method for measuring Mw include gel permeation chromatography (GPC method).

The copolymer A may be any of a random copolymer, an alternating copolymer, a periodic copolymer, or a block copolymer of the monomer (a1), the monomer (a2), the monomer (b1), and the monomer (b2).

The copolymer A can be obtained, for example, by polymerizing the monomer (a1), the monomer (a2), the monomer (b1), and the monomer (b2) in the presence of a polymerization initiator.

Examples of the polymerization initiator include azo compounds such as 2,2'-azobisisobutyronitrile, 2,2'-azobis(2-methylbutyronitrile), 2,2'-azobis(2,4-dimethylvaleronitrile), dimethyl-2,2'-azobisisobutyrate, dimethyl 2,2'-azobisisobutyrate, and 2,2'-azobis(N-butyl-2-methylpropionamide); and peroxides such as benzoyl peroxide, di-tert-butyl peroxide, tert-butyl peroxybenzoate, tert-butyl peroxyisopropyl carbonate, t-butyl peroxy-2-ethylhexanoate, t-hexyl peroxy-2-ethylhexanoate, di-t-hexyl peroxide, t-butyl peroxy-2-ethylhexyl monocarbonate, di-t-butyl peroxide, 1,1,3,3-tetramethylbutyl peroxyneodecanoate, t-amyl peroxyneodecanoate, t-hexyl peroxypivalate, t-amyl peroxypivalate, and 1,1,3,3-tetramethylbutyl peroxy-2-ethylhexanoate.

These polymerization initiators may be used alone or in combination of two or more. As the polymerization initiator, 2,2'-azobisisobutyronitrile, 2,2'-azobis(2-methylbutyronitrile), 2,2'-azobis(2,4-dimethylvaleronitrile), dimethyl 2,2'-azobisisobutyrate, and 1,1,3,3-tetramethylbutyl peroxy-2-ethylhexanoate are particularly preferred. The molecular weight of the copolymer A can be adjusted by appropriately setting the amount of the polymerization initiator used. Further, a chain transfer agent can be used to adjust the molecular weight of the resulting polymer. Examples of the chain transfer agent include mercaptans such as n-dodecyl mercaptan; thioglycolic acid esters such as octyl thioglycolate; and α-methylstyrene dimer and terpinolene.

Examples of the polymerization method include solution polymerization, bulk polymerization, emulsion polymerization, suspension polymerization, and non-aqueous dispersion polymerization. Among these, solution polymerization or non-aqueous dispersion polymerization is preferred because the copolymer A can be obtained easily and with high precision.

In the polymerization reaction, an organic solvent may be used as necessary. The organic solvent is not particularly limited, and examples thereof include aromatic hydrocarbon solvents such as xylene and toluene; aliphatic hydrocarbon solvents; ester solvents such as ethyl acetate, butyl acetate, isobutyl acetate, methoxypropyl acetate, and propylene glycol 1-monomethyl ether 2-acetate; alcohol solvents such as isopropyl alcohol, butyl alcohol, and propylene glycol monomethyl ether; ether solvents such as dioxane, diethyl ether, and dibutyl ether; and ketone solvents such as methyl ethyl ketone and methyl isobutyl ketone. Among them, butyl acetate, isobutyl acetate, butyl alcohol, propylene glycol monomethyl ether, propylene glycol 1-monomethyl ether 2-acetate, toluene, and xylene are preferred. These solvents may be used alone or in combination of two or more. The reaction temperature in the polymerization reaction may be appropriately set according to the type of polymerization initiator and the like, and is usually 50 to 160°C, preferably 60 to 150°C.

The polymerization reaction is preferably performed under an atmosphere of an inert gas such as nitrogen gas or argon gas.

### 1-2. Component B

The component B is at least one selected from the group consisting of rosin, rosin derivatives, and metal salts thereof.

Examples of the rosin include gum rosin and tall oil rosin.

Examples of the rosin derivatives include hydrogenated rosin and disproportionated rosin. Examples of the rosin metal salts include rosin zinc salts, rosin copper salts, and rosin calcium salts.

Examples of the rosin derivative metal salts include hydrogenated rosin zinc salts, hydrogenated rosin copper salts, hydrogenated rosin calcium salts, disproportionated rosin zinc salts, disproportionated rosin copper salts, and disproportionated rosin calcium salts.

Component B is preferably gum rosin, rosin zinc salts, hydrogenated rosin, or hydrogenated rosin zinc salts.

The content of the component B in the composition of the present invention is not particularly limited, but is usually 5 to 50% by mass, preferably 10 to 45% by mass, and more preferably 20 to 40% by mass, based on the solid content of the copolymer A. Specifically, this ratio is, for example, 5, 10, 15, 20, 25, 30, 35, 40, 45, or 50% by mass, and may be within a range between any two of the numerical values exemplified herein.

### 1-3. Antifouling Agent D

Examples of the antifouling agent D include inorganic agents and organic agents.

Examples of the inorganic agents include cuprous oxide, copper thiocyanate (common name: copper rhodane), and copper powder. Among these, cuprous oxide and copper rhodane are particularly preferred. Cuprous oxide that has been surface-treated with glycerin, sucrose, stearic acid, lauric acid, lecithin, mineral oil, or the like is more preferred from the viewpoint of long-term stability during storage.

Examples of the organic agents include 2-mercaptopyridine-N-oxide copper (common name: copper pyrithione), 2-mercaptopyridine-N-oxide zinc (common name: zinc pyrithione), zinc ethylenebisdithiocarbamate (common name: zineb), 4,5-dichloro-2-n-octyl-3-isothiazolone (common name: Sea-Nine 211), 3,4-dichlorophenyl-N,N-dimethylurea (common name: diuron), 2-methylthio-4-t-butylamino-6-cyclopropylamino-s-triazine (common name: Irgarol 1051), 2-(p-chlorophenyl)-3-cyano-4-bromo-5-trifluoromethylpyrrole (common name: Econea 28), and 4-[1-(2,3-dimethylphenyl)ethyl]-1H-imidazole (common name: medetomidine). These antifouling agents may be used alone or in combination of two or more.

The content of the antifouling agent D in the composition of the present invention is not particularly limited, but is usually 0.1 to 60.0% by mass in terms of solid content. The content of the antifouling agent D is, for example, 0.1, 0.5, 1, 2, 3, 4, 5, 6, 7, 8, 9, 10, 15, 20, 25, 30, 35, 40, 45, 50, 55, or 60% by mass, and may be within a range between any two of the numerical values exemplified herein.

### 1-4. Other Additives

Furthermore, the antifouling coating composition of the present invention may further include, as necessary, resin components other than the copolymer A, elution regulators other than the component B, plasticizers, pigments, dyes, anti-foaming agents, dehydrating agents, thixotropic agents, organic solvents, and the like.

Examples of the elution regulator include monocarboxylic acids and salts thereof, such as naphthenic acid, cycloalkenyl carboxylic acid, bicycloalkenyl carboxylic acid, versatic acid, trimethylisobutenylcyclohexene carboxylic acid, and metal salts thereof, or alicyclic hydrocarbon resins. These may be used alone or in combination of two or more.

Examples of commercially available alicyclic hydrocarbon resins include Quinton 1500, 1525L, and 1700 (trade names, manufactured by Zeon Corporation). Among these, naphthenic acid, versatic acid, trimethylisobutenylcyclohexene carboxylic acid, or metal salts thereof are preferred. Examples of the dehydrating agent include calcium sulfate, synthetic zeolite adsorbents, orthoesters, silicates such as tetramethoxysilane and tetraethoxysilane, isocyanates, carbodiimides, and carbodiimidazoles. These may be used alone or in combination of two or more.

### 2. Method for Producing Antifouling Coating composition

The antifouling coating composition of the present invention can be produced, for example, by mixing and dispersing a mixture containing the copolymer A, the component B, the antifouling agent D, other additives, and the like using a disperser. The mixture is preferably one in which various materials such as the copolymer A, the component B, and the antifouling agent D are dissolved or dispersed in a solvent. As the disperser, for example, one that can be used as a fine pulverizer can be suitably used. For example, a commercially available homomixer, sand mill, bead mill, disper, or the like can be used. Alternatively, the mixture may be mixed and dispersed using a container equipped with a stirrer to which glass beads or the like for mixing and dispersion have been added.

### 3. Antifouling Treatment Method, Antifouling Coating Film, and Coated Object

The antifouling treatment method of the present invention forms an antifouling coating film on the surface of an object on which a coating film is to be formed, using the antifouling coating composition described above. According to the antifouling treatment method of the present invention, the antifouling coating film gradually dissolves from the surface and the coating film surface is constantly renewed, whereby the attachment of aquatic fouling organisms can be prevented. Examples of the object on which a coating film is to be formed include ships (especially ship bottoms), fishing gear, and underwater structures. The thickness of the antifouling coating film may be appropriately set according to the type of object, the navigation speed of the ship, the seawater temperature, and the like. For example, when the object is a ship bottom, the thickness of the antifouling coating film is usually 50 to 700 µm, preferably 100 to 600 µm.

### [Examples]

The features of the present invention will be further clarified by showing examples and the like below. However, the present invention is not limited to these examples. The weight average molecular weight (Mw) is a value determined by GPC (polystyrene equivalent). The GPC conditions are as follows:
Apparatus: HLC-8220GPC manufactured by Tosoh Corporation
Columns: Two TSKgel SuperHZM-M columns
Flow rate: 0.35 mL/min
Detector: RI
Column thermostat temperature: 40°C
Eluent: THF

The non-volatile matter content is a value measured in accordance with JIS K 5601-1-2:1999 (ISO 3251:1993) "Testing methods for paint components - Determination of non-volatile matter content."

### 1. Production Examples

### 1-1. Production Examples of Monomer (a1)

### <Production Example 1 (Production of Monomer a1-1)>

A four-necked flask equipped with a thermometer, a condenser, a stirring device, and a dropping funnel was charged with 109 g (1.00 mol) of methyl chloroacetate, 72 g (1.00 mol) of acrylic acid, 0.1 g of 4-methoxyphenol, and 500 g of ethyl acetate. While stirring, 101 g (1.00 mol) of triethylamine was added dropwise while maintaining the temperature at 40°C or lower. After completion of the dropwise addition, the mixture was stirred at 70 to 80°C for 6 hours. After completion of the reaction, the organic layer was washed sequentially with tap water, aqueous hydrochloric acid, and aqueous sodium bicarbonate, and then the solvent was removed by concentration under reduced pressure to obtain 129.7 g of monomer a1-1.

### <Production Examples 2-3 (Production of Monomers a1-2 to a1-3)>

Monomers a1-2 to a1-3 were obtained by carrying out reactions in the same manner as in Production Example 1 using the raw materials shown in Table 1. The reaction conditions and yields of Production Examples 1 to 3 are shown in Table 1.

**[Table 1]**

| Table 1 | | | | | | Raw materials(g) | | | | | | | Yield |
|---|---|---|---|---|---|---|---|---|---|---|---|---|---|
| Production Example | Monomer | R1 | R2 | R3 | n | CAMe | CAEt | AA | MAA | TEA | Ethyl acetate | MEHQ | (g) |
| 1 | a1-1 | H | H | Me | 1 | 109 | | 72 | | 101 | 500 | 0.1 | 129.7 |
| 2 | a1-2 | H | H | Et | 1 | | 123 | 72 | | 101 | 500 | 0.1 | 142.3 |
| 3 | a1-3 | Me | H | Et | 1 | | 123 | | 86 | 101 | 500 | 0.1 | 155.0 |

### 1-2. Production Examples of Monomer (a2)

### <Production Example 4 (Production of Monomer a2-1)>

### (First Reaction)

A four-necked flask equipped with a thermometer, a condenser, and a stirring device was charged with 215 g (1.85 mol) of sodium monochloroacetate, 201 g (1.85 mol) of methyl chloroacetate, and 300 g of N-methyl-2-pyrrolidone, and the mixture was stirred at 70 to 80°C for 6 hours. After completion of the reaction, 500 ml of toluene was added to the reaction liquid, and the organic layer was washed sequentially with tap water, aqueous hydrochloric acid, and aqueous sodium bicarbonate. Then, the solvent was removed by concentration under reduced pressure to obtain 262 g of methoxycarbonylmethyl chloroacetate.

### (Second Reaction)

Next, a four-necked flask equipped with a thermometer, a condenser, a stirring device, and a dropping funnel was charged with 200 g (1.20 mol) of methoxycarbonylmethyl chloroacetate (the product of the first reaction), 87 g (1.20 mol) of acrylic acid, 0.1 g of 4-methoxyphenol, and 500 g of ethyl acetate. While stirring, 122 g (1.20 mol) of triethylamine was added dropwise while maintaining the temperature at 40°C or lower. After completion of the dropwise addition, the mixture was stirred at 70 to 80°C for 6 hours. After completion of the reaction, the organic layer was washed sequentially with tap water, aqueous hydrochloric acid, and aqueous sodium bicarbonate, and then the solvent was removed by concentration under reduced pressure to obtain 230.6 g of monomer a2-1.

### <Production Examples 5-18 (Production of Monomers a2-2 to a2-15)>

Monomers a2-2 to a2-15 shown in Table 2 were obtained by carrying out reactions in the same manner as in Production Example 4 using the raw materials shown in Table 2. The reaction conditions and yields of Production Examples 4 to 18 are shown in Table 2.

**[Table 2]**

| Table 2 | | | | | | First Reaction | | | | | Second Reaction | | | | | | |
|---|---|---|---|---|---|---|---|---|---|---|---|---|---|---|---|---|---|
| | | | | | | Raw materials (g) | | | | Intmed. | Raw materials (g) | | | | | | Yield |
| Prod. Ex. | Monomer | R1 | R2 | R3 | n | CANa | CAMe | CAEt | NMP | Yield(g) | Intmed. | AA | MAA | TEA | Ethyl acetate | MEHQ | (g) |
| 4 | a2-1 | H | H | Me | 2 | 215 | 201 | | 300 | 262 | 200 | 87 | | 122 | 500 | 0.1 | 230.6 |
| 5 | a2-2 | H | H | Et | 2 | 199 | | 209 | 300 | 269 | 200 | 80 | | 112 | 500 | 0.1 | 227.5 |
| 6 | a2-3 | Me | H | Et | 2 | 199 | | 209 | 300 | 269 | 200 | | 95 | 112 | 500 | 0.1 | 227.5 |
| 7 | a2-4 | H | H | Me | 3 | 321 | 150 | | 300 | 260 | 200 | 64 | | 90 | 500 | 0.1 | 220.1 |
| 8 | a2-5 | H | H | Et | 3 | 305 | | 160 | 300 | 266 | 200 | 60 | | 85 | 500 | 0.1 | 218.3 |
| 9 | a2-6 | Me | H | Et | 3 | 305 | | 160 | 300 | 266 | 200 | | 72 | 85 | 500 | 0.1 | 218.3 |
| 10 | a2-7 | H | H | Me | 4 | 384 | 119 | | 300 | 261 | 200 | 51 | | 72 | 500 | 0.1 | 232.8 |
| 11 | a2-8 | H | H | Et | 4 | 349 | | 123 | 300 | 252 | 200 | 49 | | 68 | 500 | 0.1 | 193.6 |
| 12 | a2-9 | Me | H | Et | 4 | 349 | | 123 | 300 | 252 | 200 | | 58 | 68 | 500 | 0.1 | 193.6 |
| 13 | a2-10 | H | H | Me | 5 | 419 | 98 | | 300 | 258 | 200 | 42 | | 59 | 500 | 0.1 | 208.8 |
| 14 | a2-11 | H | H | Et | 5 | 373 | | 98 | 300 | 241 | 200 | 41 | | 57 | 500 | 0.1 | 177.0 |
| 15 | a2-12 | Me | H | Et | 5 | 382 | | 100 | 300 | 247 | 200 | | 49 | 57 | 500 | 0.1 | 177.0 |
| 16 | a2-13 | H | H | Me | 6 | 437 | 81 | | 300 | 251 | 200 | 36 | | 51 | 500 | 0.1 | 191.8 |
| 17 | a2-14 | H | H | Et | 6 | 408 | | 86 | 300 | 246 | 200 | 35 | | 49 | 500 | 0.1 | 165.0 |
| 18 | a2-15 | Me | H | Et | 6 | 408 | | 86 | 300 | 246 | 200 | | 42 | 49 | 500 | 0.1 | 165.0 |

| | | | | | | | | | | | | | | | | | |
|---|---|---|---|---|---|---|---|---|---|---|---|---|---|---|---|---|---|
| Prod. Ex. denotes "Production Example." Intmed. denotes "Intermediate." | | | | | | | | | | | | | | | | | |

The details of the raw materials in Tables 1 and 2 are as follows:
CAMe: Methyl choloacetate
CAEt: Ethyl chloroacetate
AA: Acryl acid
MAA: Methacrylic acid
TEA: Triethylamine
MEHQ: 4-Methoxyphenol
CANa: Sodium monochloroacetate
NMP: N-Methyl-2-pyrrolidone

### 1-3. Production Examples of Copolymer Solutions

### <Production Example P1 (Production of Copolymer Solution A-1)>

A four-necked flask equipped with a thermometer, a condenser, a stirring device, and a dropping funnel was charged with 50 g of xylene and 50 g of butyl acetate as solvents. Nitrogen gas was introduced, and the temperature was maintained at 88°C with stirring. A mixed solution of a monomer (a1), a monomer (a2), a monomer (b1), and a monomer (b2) in the amounts (g) shown in Table 3, and 2.0 g (initial addition) of 1,1,3,3-tetramethylbutyl peroxy-2-ethylhexanoate as a polymerization initiator, was added dropwise thereto over 3 hours while maintaining the temperature at 88°C. Thereafter, stirring was performed at 88°C for 1 hour, then 0.1 g of 1,1,3,3-tetramethylbutyl peroxy-2-ethylhexanoate was added three times every hour, and the mixture was further stirred at the same temperature for 2 hours and then cooled to room temperature to obtain copolymer solution A-1. The non-volatile matter content and Mw of A-1 are shown in Table 3.

### <Production Examples P2-P20 (Production of Copolymer Solutions A-2 to A-17, H-1 to H-3)>

Copolymer solutions A-2 to A-17 and H-1 to H-3 were obtained by carrying out polymerization reactions in the same manner as in Production Example P1, except that the monomers, polymerization initiators, and solvents shown in Tables 3 to 6 were used. The non-volatile matter content and Mw of each polymer are shown in Tables 3 to 6. The unit for the numerical values of the amounts of raw materials in the tables is grams (g).

**[Table 3]**

| Table 3 | | Production Example | | | | |
|---|---|---|---|---|---|---|
| | | P1 | P2 | P3 | P4 | P5 |
| Monomer(a) | a1-1 | | | | | 40 |
| | a1-2 | 40 | 40 | | | |
| | a1-3 | | | 40 | 40 | |
| | a2-1 | | | | | 12 |
| | a2-2 | 12 | 12 | | | |
| | a2-3 | | | 12 | 12 | |
| | a2-4 | | | | | 5 |
| | a2-5 | 5 | 5 | | | |
| | a2-6 | | | 5 | 5 | |
| | a2-7 | | | | | 1 |
| | a2-8 | 1 | 1 | | | |
| | a2-9 | | | 1 | 1 | |
| | a2-10 | | | | | 1 |
| | a2-11 | 1 | 1 | | | |
| | a2-12 | | | 1 | 1 | |
| | a2-13 | | | | | 1 |
| | a2-14 | 1 | 1 | | | |
| | a2-15 | | | 1 | 1 | |
| Monomer(b1) | Isobornyl acrylate | | | 20 | 30 | |
| | Isobornyl methacrylate | 30 | 40 | | | 30 |
| Monomer(b2) | 2-methoxyethyl acrylate | | | 20 | 10 | |
| | 2-methoxyethyl methacrylate | 10 | | | | |
| | 2-ethoxyethyl methacrylate | | | | | 10 |
| Total monomer solid content | | 100 | 100 | 100 | 100 | 100 |
| Solvent | Xylene | 50 | 50 | 50 | 50 | 50 |
| | Butyl acetate | 50 | 50 | 50 | 50 | 50 |
| Weight average molecular weight (Mw) | | 31500 | 30900 | 31100 | 31300 | 30100 |
| Non-volatile matter content (%, 125°C, 1 hour) | | 51.2 | 50.9 | 51.3 | 51.1 | 51.2 |
| Test Example 1 Compatibility test | Gum rosin 50% | ○ | ○ | ○ | ○ | ○ |
| | Gum rosin zinc salt 20% | Δ | ○ | ○ | ○ | Δ |
| Copolymer solution name | | A-1 | A-2 | A-3 | A-4 | A-5 |

**[Table 4]**

| Table 4 | | Production Example | | | | |
|---|---|---|---|---|---|---|
| | | P6 | P7 | P8 | P9 | P10 |
| Monomer(a) | a1-2 | 33 | | 35 | | |
| | a1-3 | | 33 | | 35 | 49 |
| | a2-2 | 17 | | 9 | | |
| | a2-3 | | 17 | | 9 | 13 |
| | a2-5 | 7 | | 3 | | |
| | a2-6 | | 7 | | 3 | 5 |
| | a2-8 | 1 | | 1 | | |
| | a2-9 | | 1 | | 1 | 1 |
| | a2-11 | 1 | | 1 | | |
| | a2-12 | | 1 | | 1 | 1 |
| | a2-14 | 1 | | 1 | | |
| | a2-15 | | 1 | | 1 | 1 |
| Monomer(b1) | Isobornyl acrylate | | 30 | | 10 | 10 |
| | Isobornyl methacrylate | 30 | | 40 | 30 | 10 |
| Monomer(b2) | 2-methoxyethyl acrylate | | 10 | 10 | | 10 |
| | 2-methoxyethyl methacrylate | 10 | | | 10 | |
| Total monomer solid content | | 100 | 100 | 100 | 100 | 100 |
| Solvent | Xylene | 50 | 50 | 50 | 50 | 50 |
| | Butyl acetate | 50 | 50 | 50 | 50 | 50 |
| Weight average molecular weight (Mw) | | 31300 | 30500 | 31800 | 32000 | 31700 |
| Non-volatile matter content (%, 125°C, 1 hour) | | 51.0 | 50.5 | 51.5 | 51.6 | 51.5 |
| Test Example 1 Compatibility test | Gum rosin 50% | ○ | ○ | ○ | ○ | ○ |
| | Gum rosin zinc salt 20% | Δ | Δ | ○ | ○ | ○ |
| Copolymer solution name | | A-6 | A-7 | A-8 | A-9 | A-10 |

**[Table 5]**

| Table 5 | | Production Example | | | | |
|---|---|---|---|---|---|---|
| | | P11 | P12 | P13 | P14 | P15 |
| Monomer(a) | a1-2 | 28 | | 40 | | |
| | a1-3 | | 28 | | 40 | 35 |
| | a2-2 | 14 | | 12 | | |
| | a2-3 | | 14 | | 12 | 9 |
| | a2-5 | 5 | | 5 | | |
| | a2-6 | | 5 | | 5 | 3 |
| | a2-8 | 1 | | 1 | | |
| | a2-9 | | 1 | | 1 | 1 |
| | a2-11 | 1 | | 1 | | |
| | a2-12 | | 1 | | 1 | 1 |
| | a2-14 | 1 | | 1 | | |
| | a2-15 | | 1 | | 1 | 1 |
| Monomer(b1) | Isobornyl acrylate | | 10 | | 20 | 30 |
| | Isobornyl methacrylate | 10 | | 15 | | |
| Monomer(b2) | Methyl methacrylate | | | 20 | 15 | 10 |
| | 2-methoxyethyl acrylate | | 10 | 5 | | 5 |
| | 2-methoxyethyl methacrylate | 10 | | | | 5 |
| | 2-ethoxyethyl methacrylate | 30 | 30 | | | |
| | 2-(2-ethoxyethoxy)ethyl acrylate | | | | 5 | |
| Total monomer solid content | | 100 | 100 | 100 | 100 | 100 |
| Solvent | Xylene | 50 | 50 | 50 | 50 | 50 |
| | Butyl acetate | 50 | 50 | 50 | 50 | 50 |
| Weight average molecular weight (Mw) | | 31000 | 31400 | 31200 | 31500 | 31100 |
| Non-volatile matter content (%, 125°C, 1 hour) | | 50.8 | 51.0 | 51.3 | 51.5 | 51.6 |
| Test Example 1 Compatibility test | Gum rosin 50% | Δ | Δ | Δ | Δ | ○ |
| | Gum rosin zinc salt 20% | Δ | Δ | Δ | Δ | Δ |
| Copolymer solution name | | A-11 | A-12 | A-13 | A-14 | A-15 |

**[Table 6]**

| Table 6 | | Production Example | | | | |
|---|---|---|---|---|---|---|
| | | P16 | P17 | P18 | P19 | P20 |
| Monomer(a) | a1-2 | 35 | | 40 | | |
| | a1-3 | | 35 | | 40 | 35 |
| | a2-2 | 9 | | 12 | | |
| | a2-3 | | 9 | | 12 | 9 |
| | a2-5 | 3 | | 5 | | |
| | a2-6 | | 3 | | 5 | 3 |
| | a2-8 | 1 | | 1 | | |
| | a2-9 | | 1 | | 1 | 1 |
| | a2-10 | 1 | | | | |
| | a2-11 | | 1 | 1 | | |
| | a2-12 | 1 | | | 1 | 1 |
| | a2-14 | | 1 | 1 | | |
| | a2-15 | | | | 1 | 1 |
| Monomer(b1) | Isobornyl acrylate | | | | | |
| | Isobornyl methacrylate | 30 | 20 | | | |
| Monomer(b2) | Methyl methacrylate | 10 | 25 | 30 | 30 | 40 |
| | 2-methoxyethyl acrylate | 10 | | | 10 | 10 |
| | 2-methoxyethyl methacrylate | | | 10 | | |
| | Tetrahydrofurfuryl acrylate | | 5 | | | |
| Total monomer solid content | | 100 | 100 | 100 | 100 | 100 |
| Solvent | Xylene | 50 | 50 | 50 | 50 | 50 |
| | Butyl acetate | 50 | 50 | 50 | 50 | 50 |
| Weight average molecular weight (Mw) | | 31800 | 32000 | 31800 | 31700 | 31200 |
| Non-volatile matter content (%, 125°C, 1 hour) | | 51.5 | 51.6 | 51.5 | 51.0 | 51.7 |
| Test Example 1 Compatibility test | Gum rosin 50% | ○ | Δ | × | × | × |
| | Gum rosin zinc salt 20% | Δ | Δ | × | × | × |
| Copolymer solution name | | A-16 | A-17 | H-1 | H-2 | H-3 |

### 1-4. Production Examples of Component B

### <Production Example B1 (Production of Gum Rosin Solution)>

Into a flask equipped with a thermometer, a reflux condenser, and a stirrer, 300 g of Chinese gum rosin (WW) and 310 g of xylene were placed. After reflux dehydration under reduced pressure at 70 to 80°C for 1 hour, about 160 g of xylene was further distilled off under reduced pressure at 70 to 80°C to obtain a xylene solution of gum rosin (brown transparent liquid). The non-volatile matter content of the obtained solution was measured and found to be 68.6%. After adding 12.7 g of xylene and 150 g of butyl acetate, the mixture was dissolved uniformly to obtain a xylene/butyl acetate = 50 wt%/50 wt% solution of gum rosin. The non-volatile matter content of the obtained solution was 50.1%.

### <Production Example B2 (Production of Gum Rosin Zinc Salt Solution)>

Into a flask equipped with a thermometer, a reflux condenser, and a stirrer, 240 g of Chinese gum rosin (WW) and 360 g of xylene were placed. Further, 120 g of zinc oxide was added so that all the resin acids in the rosin formed zinc salts, and reflux dehydration was performed under reduced pressure at 70 to 80°C for 3 hours. Thereafter, cooling and filtration were performed to obtain a xylene solution of gum rosin zinc salt (dark brown transparent liquid). The solution was heated again, and about 160 g of xylene was distilled off under reduced pressure at 70 to 80°C to obtain a xylene solution of gum rosin zinc salt (brown transparent liquid). The non-volatile matter content of the obtained solution was measured and found to be 70.1%. After adding 22.0 g of xylene and 150 g of butyl acetate, the mixture was dissolved uniformly to obtain a xylene/butyl acetate = 50 wt%/50 wt% solution of gum rosin zinc salt. The non-volatile matter content of the obtained solution was 50.3%.

### 2. Examples 1 to 23 and Comparative Examples 1 to 3 (Production of Coating compositions)

Coating compositions were produced by blending the components shown in Tables 7 to 10 in the proportions (% by mass) shown in the same tables, and mixing and dispersing them with glass beads having a diameter of 1.5 to 2.5 mm.

**[Table 7]**

| Table 7 | | | Example | | | | | | |
|---|---|---|---|---|---|---|---|---|---|
| | | | 1 | 2 | 3 | 4 | 5 | 6 | 7 |
| Copolymer A | Copolymer solution A-1 | | 25 | | | | | | |
| | Copolymer solution A-2 | | | 25 | | | | | |
| | Copolymer solution A-3 | | | | 25 | | | | |
| | Copolymer solution A-4 | | | | | 25 | | | |
| | Copolymer solution A-5 | | | | | | 25 | | |
| | Copolymer solution A-6 | | | | | | | 25 | |
| | Copolymer solution A-7 | | | | | | | | 25 |
| Component B | Gum rosin zinc salt solution B2 | | 6 | | 6 | 6 | | 6 | 6 |
| | Gum rosin solution B1 | | | 6 | | | 6 | | |
| Antifouling agent D | Cuprous oxide | | 45 | 45 | 45 | 45 | 45 | 45 | 45 |
| | Copper pyrithione | | 3 | 3 | 3 | 3 | 3 | 3 | 3 |
| Pigment | Red iron oxide | | 2 | 2 | 2 | 2 | 2 | 2 | 2 |
| | Talc | | 2 | 2 | 2 | 2 | 2 | 2 | 2 |
| | Zinc oxide | | 4 | 4 | 4 | 4 | 4 | 4 | 4 |
| | Titanium oxide | | 1 | 1 | 1 | 1 | 1 | 1 | 1 |
| Other additives | Disparlon A603-20X | | 3 | 3 | 3 | 3 | 3 | 3 | 3 |
| | Tetraethoxysilane | | 0.5 | 0.5 | 0.5 | 0.5 | 0.5 | 0.5 | 0.5 |
| | Tricresyl phosphate | | 2 | 2 | 2 | 2 | 2 | 2 | 2 |
| Solvent | Xylene | | 3.5 | 3.5 | 3.5 | 3.5 | 3.5 | 3.5 | 3.5 |
| | Butyl acetate | | 3 | 3 | 3 | 3 | 3 | 3 | 3 |
| Total | | | 100 | 100 | 100 | 100 | 100 | 100 | 100 |
| Test Example 2 Rotary test | Average coating film dissolution rate (µm/month) | Initial to 6 months | 3.2 | 2.5 | 4.2 | 4.7 | 3.5 | 4.1 | 4.5 |
| | | 6 to 12 months | 3.3 | 2.0 | 3.9 | 4.1 | 3.0 | 4.5 | 4.2 |
| | | 12 to 18 months | 3.3 | 2.6 | 4.0 | 4.5 | 3.1 | 4.0 | 4.4 |
| | | 18 to 24 months | 3.6 | 2.5 | 4.4 | 4.5 | 3.7 | 4.6 | 4.5 |

**[Table 8]**

| Table 8 | | | Example | | | | | | |
|---|---|---|---|---|---|---|---|---|---|
| | | | 8 | 9 | 10 | 11 | 12 | 13 | 14 |
| Copolymer A | Copolymer solution A-8 | | 25 | | | | | | |
| | Copolymer solution A-9 | | | 25 | | | | | |
| | Copolymer solution A-10 | | | | 25 | | | | |
| | Copolymer solution A-11 | | | | | 25 | | | |
| | Copolymer solution A-12 | | | | | | 25 | | |
| | Copolymer solution A-13 | | | | | | | 25 | |
| | Copolymer solution A-14 | | | | | | | | 25 |
| Component B | Gum rosin zinc salt solution B2 | | 6 | 6 | 6 | 6 | 6 | 6 | 6 |
| | Gum rosin solution B1 | | | | | | | | |
| Antifouling agent D | Cuprous oxide | | 45 | 45 | 45 | 45 | 45 | 45 | 45 |
| | Copper pyrithione | | 3 | 3 | 3 | 3 | 3 | 3 | 3 |
| Pigment | Red iron oxide | | 2 | 2 | 2 | 2 | 2 | 2 | 2 |
| | Talc | | 2 | 2 | 2 | 2 | 2 | 2 | 2 |
| | Zinc oxide | | 4 | 4 | 4 | 4 | 4 | 4 | 4 |
| | Titanium oxide | | 1 | 1 | 1 | 1 | 1 | 1 | 1 |
| Other additives | Disparlon A603-20X | | 3 | 3 | 3 | 3 | 3 | 3 | 3 |
| | Tetraethoxysilane | | 0.5 | 0.5 | 0.5 | 0.5 | 0.5 | 0.5 | 0.5 |
| | Tricresyl phosphate | | 2 | 2 | 2 | 2 | 2 | 2 | 2 |
| Solvent | Xylene | | 3.5 | 3.5 | 3.5 | 3.5 | 3.5 | 3.5 | 3.5 |
| | Butyl acetate | | 3 | 3 | 3 | 3 | 3 | 3 | 3 |
| Total | | | 100 | 100 | 100 | 100 | 100 | 100 | 100 |
| Test Example 2 Rotary test | Average coating film dissolution rate (µm/month) | Initial to 6 months | 3.2 | 4.1 | 3.7 | 5.5 | 4.2 | 4.5 | 4.7 |
| | | 6 to 12 months | 3.3 | 4.2 | 3.7 | 5.1 | 4.6 | 4.5 | 4.9 |
| | | 12 to 18 months | 3.5 | 4.2 | 3.5 | 5.2 | 4.1 | 4.8 | 5.1 |
| | | 18 to 24 months | 3.1 | 4.5 | 3.8 | 5.0 | 4.2 | 4.7 | 5.0 |

**[Table 9]**

| Table 9 | | | Example | | | | | | |
|---|---|---|---|---|---|---|---|---|---|
| | | | 15 | 16 | 17 | 18 | 19 | 20 | 21 |
| Copolymer A | Copolymer solution A-15 | | 25 | | | | | | |
| | Copolymer solution A-16 | | | 25 | | | | | |
| | Copolymer solution A-17 | | | | 25 | | | | |
| | Copolymer solution A-8 | | | | | 22 | | | |
| | Copolymer solution A-9 | | | | | | 22 | | |
| | Copolymer solution A-10 | | | | | | | 22 | |
| | Copolymer solution A-8 | | | | | | | | 16 |
| Component B | Gum rosin zinc salt solution B2 | | 6 | 6 | 6 | 9 | 9 | 9 | 15 |
| | Gum rosin solution B1 | | | | | | | | |
| Antifouling agent D | Cuprous oxide | | 45 | 45 | 45 | 45 | 45 | 45 | 45 |
| | Copper pyrithione | | 3 | 3 | 3 | 3 | 3 | 3 | 3 |
| Pigment | Red iron oxide | | 2 | 2 | 2 | 2 | 2 | 2 | 2 |
| | Talc | | 2 | 2 | 2 | 2 | 2 | 2 | 2 |
| | Zinc oxide | | 4 | 4 | 4 | 4 | 4 | 4 | 4 |
| | Titanium oxide | | 1 | 1 | 1 | 1 | 1 | 1 | 1 |
| Other additives | Disparlon A603-20X | | 3 | 3 | 3 | 3 | 3 | 3 | 3 |
| | Tetraethoxysilane | | 0.5 | 0.5 | 0.5 | 0.5 | 0.5 | 0.5 | 0.5 |
| | Tricresyl phosphate | | 2 | 2 | 2 | 2 | 2 | 2 | 2 |
| Solvent | Xylene | | 3.5 | 3.5 | 3.5 | 3.5 | 3.5 | 3.5 | 3.5 |
| | Butyl acetate | | 3 | 3 | 3 | 3 | 3 | 3 | 3 |
| Total | | | 100 | 100 | 100 | 100 | 100 | 100 | 100 |
| Test Example 2 Rotary test | Average coating film dissolution rate (µm/month) | Initial to 6 months | 4.2 | 4.5 | 3.8 | 4.5 | 4.9 | 5.1 | 5.7 |
| | | 6 to 12 months | 4.5 | 4.7 | 3.9 | 4.0 | 4.2 | 5.5 | 5.4 |
| | | 12 to 18 months | 4.4 | 4.2 | 4.0 | 4.6 | 4.1 | 5.7 | 5.1 |
| | | 18 to 24 months | 4.2 | 4.4 | 3.9 | 4.6 | 4.8 | 5.9 | 5.5 |

**[Table 10]**

| Table 10 | | | Example | | Comp. Ex. | | |
|---|---|---|---|---|---|---|---|
| | | | 22 | 23 | 1 | 2 | 3 |
| Copolymer A | Copolymer solution A-9 | | 16 | | | | |
| | Copolymer solution A-10 | | | 16 | | | |
| | Copolymer solution H-1 | | | | 25 | | |
| | Copolymer solution H-2 | | | | | 22 | |
| | Copolymer solution H-3 | | | | | | 16 |
| Component B | Gum rosin zinc salt solution B2 | | 15 | 15 | | 9 | 15 |
| | Gum rosin solution B1 | | | | 6 | | |
| Antifouling agent D | Cuprous oxide | | 45 | 45 | 45 | 45 | 45 |
| | Copper pyrithione | | 3 | 3 | 3 | 3 | 3 |
| Pigment | Red iron oxide | | 2 | 2 | 2 | 2 | 2 |
| | Talc | | 2 | 2 | 2 | 2 | 2 |
| | Zinc oxide | | 4 | 4 | 4 | 4 | 4 |
| | Titanium oxide | | 1 | 1 | 1 | 1 | 1 |
| Other additives | Disparlon A603-20X | | 3 | 3 | 3 | 3 | 3 |
| | Tetraethoxysilane | | 0.5 | 0.5 | 0.5 | 0.5 | 0.5 |
| | Tricresyl phosphate | | 2 | 2 | 2 | 2 | 2 |
| Solvent | Xylene | | 3.5 | 3.5 | 3.5 | 3.5 | 3.5 |
| | Butyl acetate | | 3 | 3 | 3 | 3 | 3 |
| Total | | | 100 | 100 | 100 | 100 | 100 |
| Test Example 2 Rotary test | Average coating film dissolution rate (µm/month) | Initial to 6 months | 5.2 | 5.9 | 0.6 | 1.1 | 1.8 |
| | | 6 to 12 months | 5.3 | 5.1 | 0.7 | 1.0 | 1.5 |
| | | 12 to 18 months | 5.4 | 5.0 | 1.1 | 0.8 | 1.4 |
| | | 18 to 24 months | 5.2 | 5.8 | 1.4 | 0.7 | 1.0 |

The details of the components in the tables are as follows:

### <Antifouling Agents>

Cuprous oxide: Trade name "NC-301" (manufactured by Nisshin Chemco Co., Ltd.)
Copper pyrithione: Trade name "Copper Omadine" (manufactured by Lonza K.K.)

### <Elution Regulators>

Gum rosin solution: The one produced in Production Example B1 was used.
Gum rosin zinc salt solution: The one produced in Production Example B2 was used.

### <Pigments>

Red iron oxide: Trade name "Bengala Kingyoku" (manufactured by Morishita Bengala Kogyo Co., Ltd.)
Talc: Trade name "Talc MS" (manufactured by Nippon Talc Co., Ltd.)
Zinc oxide: Trade name "Zinc Oxide Type 2" (manufactured by Seido Chemical Industry Co., Ltd.)
Titanium oxide: Trade name "FR-41" (manufactured by Furukawa Co., Ltd.)

### <Other Additives>

Disparlon A603-20X: Amide-based thixotropic agent: trade name "Disparlon A603-20X" (manufactured by Kusumoto Chemicals, Ltd.)
Tricresyl phosphate: (manufactured by Daihachi Chemical Industry Co., Ltd.)
Tetraethoxysilane: Trade name "Ethyl Silicate 28" (manufactured by Colcoat Co., Ltd.)

### 3. Tests

All the coating compositions of the Examples and Comparative Examples were used after being placed in a closed container within 1 hour after production and left to stand (accelerated deterioration treatment) in a constant-temperature apparatus set at 50°C for 30 days. The following tests were performed on the coating compositions that had undergone the aforementioned treatment.

### <Test Example 1 (Compatibility Test)>

A compatibility test was performed on the copolymer solutions A-1 to A-17 and H-1 to H-3 obtained in the production examples. For the gum rosin solution obtained in Production Example B1, 5 g of the copolymer solution and 5 g of the gum rosin solution were placed in a 20 ml transparent screw tube, mixed well, and then left to stand for 5 days to observe the state. For the gum rosin zinc salt solution obtained in Production Example B2, 8 g of the copolymer solution and 2 g of the gum rosin zinc salt solution were placed in a 20 ml transparent screw tube, mixed well, and then left to stand for 5 days to observe the state.

Based on the observation results, the compatibility of the copolymers with the gum rosin solution and the gum rosin zinc salt solution was evaluated according to the following criteria, and the results are shown in Tables 3 to 6. The copolymers contained in the copolymer solutions A-1 to A-17 showed good compatibility with the rosin solution and the rosin zinc salt solution and did not separate into two layers. However, the comparative copolymer solutions H-1 to H-3 were inferior in compatibility with the gum rosin solution and the gum rosin zinc salt solution compared to the copolymers in A-1 to A-17, and they showed severe turbidity and separated into two layers after 5 days.

○(Good): Clear
Δ(Fair): Turbid
×(Poor): Separated into two layers

### <Test Example 2 (Rotary Test)>

A rotating drum with a diameter of 515 mm and a height of 440 mm was installed in the center of a water tank so that it could be rotated by a motor. A cooling device to keep the seawater temperature constant and an automatic pH controller to keep the seawater pH constant were also installed. Test plates were prepared according to the following method. First, an anti-corrosion paint (epoxy vinyl A/C) was applied onto a titanium plate (71 x 100 x 0.5 mm) to a dry thickness of about 100 µm and dried to form an anti-corrosion coating film. Thereafter, the coating compositions obtained in the Examples and Comparative Examples were applied to a dry film thickness of about 450 µm and dried at 40°C for 3 days to prepare test plates.

The prepared test plates were fixed to the rotating drum of the rotating device of the above apparatus so as to be in contact with seawater, and the rotating drum was rotated at a speed of 20 knots. During this time, the temperature of the seawater was maintained at 15°C and the pH at 8.0 to 8.2, and the seawater was replaced every two weeks.

The residual film thickness of each test plate was measured initially and every 6 months after the start of the test using a shape measurement laser microscope VK-X100 manufactured by Keyence Corporation, and the dissolved coating film thickness was calculated from the difference to obtain the coating film dissolution amount per month (µm/month), thereby evaluating the solubility of the coating film.

Evaluation results are shown in Tables 7 to 10. While a coating film dissolution rate of about 1.5 to 10 (µm/month) is required to maintain excellent antifouling performance over a long period, the coating films formed using the coating compositions of the present invention (Examples 1 to 23) showed a dissolution rate sufficient to maintain excellent antifouling performance throughout the entire period of the rotary test, despite the test being conducted at a low temperature of 15°C.

On the other hand, the coating films formed using the coating compositions of Comparative Examples 1 to 3 had periods during which the coating film dissolution rate per month was less than 1.5 µm/month during the rotary test period, which was insufficient to maintain excellent antifouling performance. It is considered that the coating film dissolution rate became low because the seawater temperature in the rotary test was as low as 15°C.

In Comparative Examples 1 to 3, because the compatibility between the copolymers in the used copolymer solutions H-1 to H-3 and the gum rosin was very poor, the gum rosin could not sufficiently promote the dissolution of the coating film in the rotary test at a low temperature of 15°C, resulting in an insufficient coating film dissolution rate.

## Claims

1. An antifouling coating composition comprising a copolymer A, a component B, and an antifouling agent D, wherein:
the copolymer A is a copolymer of a monomer (a) represented by a general formula (1) and an ethylenically unsaturated monomer (b) other than the monomer (a);
the monomer (a) includes a compound wherein n in the general formula (1) is 2 or more;
the monomer (b) includes a monomer (b1) consisting of one or more selected from the group consisting of isobornyl acrylate and isobornyl methacrylate;
a ratio of the monomer (b1) to a total of the monomer (a) and the monomer (b) is 5 to 50% by mass; and
the component B is at least one selected from the group consisting of rosin, rosin derivatives, and metal salts thereof; 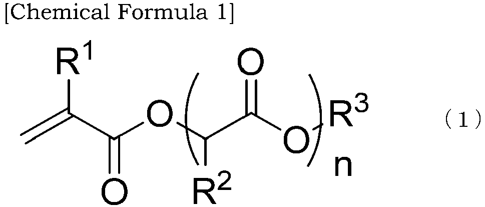
in the formula, R¹ represents hydrogen or a methyl group, R² represents hydrogen, a methyl group, or a phenyl group, R³ represents an alkyl group having 1 to 8 carbon atoms which may be substituted with an alkoxy group having 1 to 8 carbon atoms or a phenyl group, or represents a phenyl group, and n represents an integer of 1 to 10.
